# EUROPEAN PATENT APPLICATION

(11) **EP 4 730 448 A1**
(43) Date of publication of application: **22.04.2026**
(21) Application number: 24843552.1
(22) Date of filing: 19.07.2024
(51) Int. Cl.: H01M 8/04119, B01D 63/02

(54) **CARTRIDGE FOR MEMBRANE HUMIDIFIER AND MEMBRANE HUMIDIFIER COMPRISING SAME**

(30) Priority: 19.07.2023 KR 20230093951
(71) Applicant: Kolon Industries, Inc., Seoul 07793 (KR)
(72) Inventor: LEE, Ah Reum, Seoul 07793 (KR); OH, Young Seok, Seoul 07793 (KR); LEE, Ji Yoon, Seoul 07793 (KR)
(74) Representative: Vossius & Partner Patentanwälte Rechtsanwälte mbB
(86) International application number: PCT/KR2024/010467
(87) International publication number: WO 2025/018839

(57) **Abstract**

The present disclosure relates to a cartridge for a membrane humidifier and a membrane humidifier including the same. The cartridge for a membrane humidifier includes a main body having a space in which a plurality of hollow fiber membranes are accommodated, a first window formed in one side of the main body and through which a wet gas is introduced, a second window formed in another side of the main body and through which the wet gas is discharged, and a recessed portion provided in a bottom surface of the main body and recessed upwards towards the center of the main body.

## Description

### Technical Field

The present disclosure relates to a cartridge for a membrane humidifier and a membrane humidifier including the same, and more particularly, to a cartridge for a membrane humidifier, which reduces the pressure of wet gas introduced into cartridge accommodating hollow fiber membranes to prevent damage to the hollow fiber membranes and improve the humidification efficiency by using the wet gas, and a membrane humidifier including the cartridge.

### Background Art

Fuel cells generate electrical energy using chemical energy produced from a combination of hydrogen and oxygen. Research has been actively conducted into fuel cells serving as eco-friendly energy sources that discharge fewer contaminants.

Depending on the types of electrolytes used, fuel cells may be roughly classified into Polymer Electrolyte Membrane Fuel Cells (PEMFCs), Phosphoric Acid Fuel Cells (PAFCs), Molten Carbonate Fuel Cells (MCFCs), Solid Oxide Fuel Cells (SOFCs), and Alkaline Fuel Cells (AFCs).

Each type of the above fuel cells basically operates on the same principle. However, the types of fuels, operating temperatures, catalysts, electrolytes, and the like used therein are different from one another. Among the fuel cells, PEMFCs are considered the most promising fuel cells for both small-scale stationary power systems and transport systems not only because they operate at lower temperatures compared to other fuel cells but also because they may be miniaturized due to their high power density.

One of the most crucial factors in improving the performance of a PEMFC is to maintain a hydration level of a Polymer Electrolyte Membrane (or a Proton Exchange Membrane) (PEM) of a Membrane Electrode Assembly (MEA) by supplying a certain amount of moisture to the PEM. This is because the power generation efficiency rapidly decreases when a PEM is dried.

Methods of humidifying a PEM include 1) a bubbler humidification method in which water is filled into a pressure vessel and a target gas is passed through a diffuser to supply moisture, 2) a direct injection method in which an amount of moisture required for a fuel cell reaction is calculated and moisture is directly supplied to a gas flow tube through a solenoid valve, and 3) a membrane humidification method using a polymer separation membrane to supply moisture to a gas flow layer. Among these methods, the membrane humidification method, in which a PEM is humidified by supplying vapor to the air supplied to the PEM by using a membrane that selectively permeates only the vapor contained in an off-gas, is advantageous in that this method allows reduction in both weight and size of a humidifier.

In the membrane humidification method, a hollow fiber membrane having a large permeation area per unit volume is preferable as a selective permeation membrane used to form a module. When a humidifier is manufactured using hollow fiber membranes, sufficient humidification of a fuel cell may be achieved even with a small amount of hollow fiber membranes because the hollow fiber membranes having great contact surface areas may be highly integrated. In addition, the manufacturing cost is relatively low when the hollow fiber membranes are used, and moisture and heat contained in high-temperature off-gas discharged from the fuel cell may be recovered and reused through the humidifier.

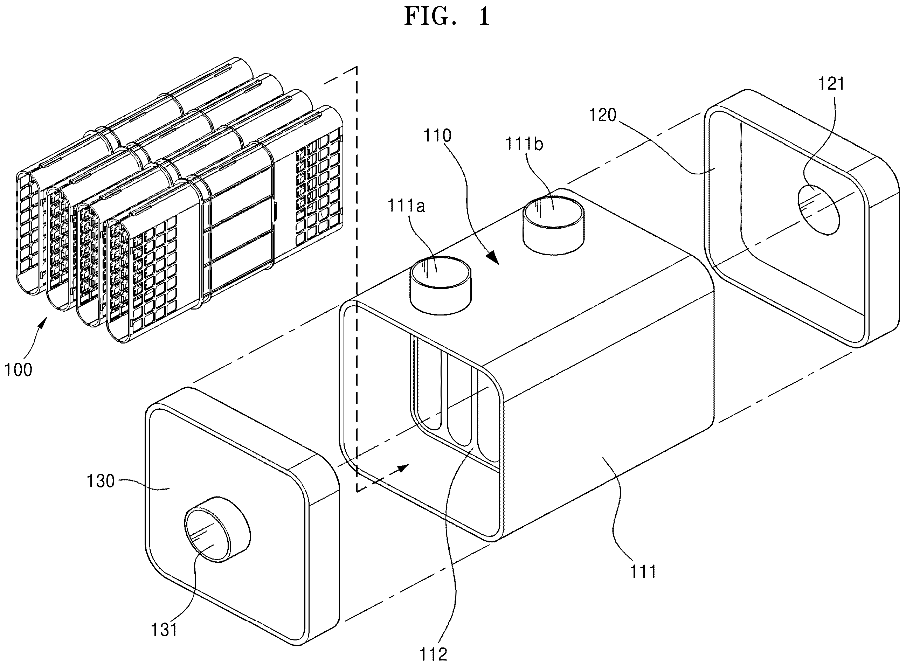

FIG. 1 is an exploded perspective view schematically illustrating an existing membrane humidifier for a fuel cell. Referring to FIG. 1, an existing humidifier of a membrane humidification type includes a humidifying module 110, in which moisture exchange occurs between air supplied from the outside and off-gas discharged from a fuel cell stack (not shown), and a first cap 120 and a second cap 130 respectively coupled to both ends of the humidifying module 110.

External air is introduced through an inlet 121 of the first cap 120 and delivered to the humidifying module 110, and the air humidified by the humidifying module 110 is delivered to the fuel cell stack through an outlet 131 of the second cap 130. The humidifying module 110 includes a housing 111 including a wet off-gas inlet 111a through which wet gas is introduced and a wet off-gas outlet 111b through which the wet off-gas is discharged and a cartridge 100 arranged within the housing 111.

The cartridge 100 is coupled to a coupling portion 112 of the housing 111. A plurality of cartridges 100 may be coupled to coupling portions 112. The cartridge 100 may be filled with hollow fiber membranes, and both ends of the hollow fiber membranes may be potted and fixed to the both ends of the cartridge 100. The hollow fiber membranes may be potted by curing a liquid polymer such as liquid polyurethane resin.

The air supplied from the outside is introduced into the first cap 120 and flows through hollows in the hollow fiber membranes. The off-gas introduced into the housing 111 through the wet off-gas inlet 111a is discharged from the housing 111 through the wet off-gas outlet 111b after contacting outer surfaces of the hollow fiber membranes. As moisture contained in the off-gas passes through the hollow fiber membranes when the off-gas comes in contact with the hollow fiber membranes, the air flowing through the hollows in the hollow fiber membranes is humidified.

Humidification occurs when the wet gas introduced through the wet off-gas inlet 111a comes in contact with outer surfaces of the hollow fiber membranes 150 arranged inside the cartridge 100, and as the cartridges 100 are arranged adjacent to each other and the wet gas flows through spaces therebetween, the wet gas is introduced into the cartridges 100 through the window formed in the cartridge 100.

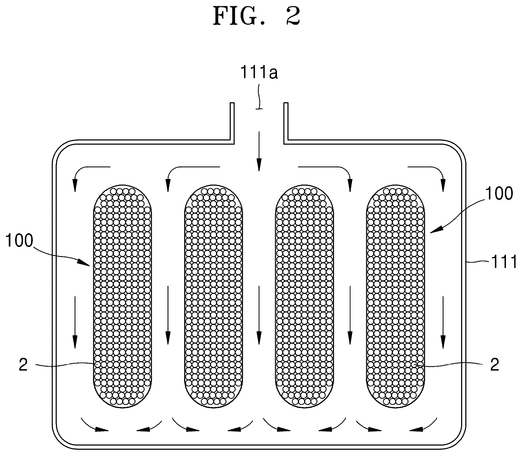

In this case, there is a possibility that the hollow fiber membranes arranged inside the cartridges 100 are damaged by the pressure of the wet gas. Also, as shown in FIGS. 1 and 2, the wet gas introduced through the wet off-gas inlet 111a flows downwards along a space between the cartridges 100 arranged adjacent to each other, and the wet gas is concentrated on the lower portions of the cartridges 100 that are adjacent to each other, thereby causing a further increase in the pressure of the wet gas.

### Disclosure of Invention

### Technical Problem

The present disclosure is designed to address the aforementioned issues and aims to provide a cartridge for a membrane humidifier, which lowers the pressure of wet gas introduced into the cartridge for accommodating hollow fiber membranes to prevent damage to the hollow fiber membranes and improve the humidification efficiency by using the wet gas, and also provide a membrane humidifier including the cartridge.

### Technical Solution

A cartridge for a membrane humidifier according to an embodiment of the present disclosure includes a main body having a space in which a plurality of hollow fiber membranes are accommodated, a first window which is formed in one side of the main body and through which a wet gas is introduced, a second window which is formed in another side of the main body and through which the wet gas is discharged, and a recessed portion provided in a bottom surface of the main body and recessed upwards towards a center of the main body.

Also, the recessed portion may include a first inner wall portion, a second inner wall portion facing the first inner wall portion, and an upper surface connecting an upper portion of the first inner wall portion to an upper portion of the second inner wall portion, and a third window through which the wet gas is introduced may be formed in the first inner wall portion and the second inner wall portion.

Also, the recessed portion may include a first inner wall portion, a second inner wall portion facing the first inner wall portion, and an upper surface connecting an upper portion of the first inner wall portion to an upper portion of the second inner wall portion, and a fourth window through which the wet gas is introduced may be formed in the upper surface.

Also, the upper surface may have a curved portion that is convex upwards.

Also, the third window may be provided in plurality in a vertical direction of each of the first inner wall portion and the second inner wall portion, and an area of each of the third windows in the first inner wall portion and the second inner wall portion may decrease upwards.

Also, the recessed portion may include a first recessed portion having a first width and a second recessed portion extending from the first recessed portion and having a width that is less than the first width.

Also, the second recessed portion may extend upwards from an upper end portion of the first recessed portion to a center of the main body, a step may be formed in the upper end portion of the first recessed portion as widths of the first inner wall portion and the second inner wall portion decrease, and the second recessed portion may extend upwards from the step.

Also, the second recessed portion may include a left recessed portion extending from the first inner wall portion and a right recessed portion extending from the second inner wall portion, the left recessed portion and the right recessed portion may be arranged apart from each other, and lower portions of the left recessed portion and the right recessed portion may be connected to each other by a connecting portion.

A membrane humidifier according to another aspect of the present disclosure includes a hosing including a wet off-gas inlet on one side and a wet off-gas outlet on another side, wherein a wet gas is introduced through the wet off-gas inlet, and the wet gas introduced through the wet off-gas inlet is discharged through the wet off-gas outlet,
a cartridge including a main body that is detachably coupled to the housing and has a space for accommodating a plurality of hollow fiber membranes, a first window formed in one side of the main body and through which the wet gas is introduced, a second window formed in the other side of the main body and through which the wet gas is discharged, and a recessed portion provided in a bottom surface of the main body and recessed upwards towards a center of the main body,
a first cap coupled to the one side of the housing and through which external air is introduced, and
a second cap coupled to the other side of the housing so that the external air is humidified while flowing along the plurality of hollow fiber membranes and is discharged.

Here, the recessed portion may include a first inner wall portion, a second inner wall portion facing the first inner wall portion, and an upper surface connecting an upper portion of the first inner wall portion to an upper portion of the second inner wall portion, and a third window through which the wet gas is introduced may be formed in the first inner wall portion and the second inner wall portion.

Here, the recessed portion may include a first inner wall portion, a second inner wall portion facing the first inner wall portion, and an upper surface connecting an upper portion of the first inner wall portion to an upper portion of the second inner wall portion, and a fourth windows through which the wet gas is introduced may be formed in the upper surface.

Here, the upper surface may have a curved portion that is convex upwards.

Here, the third window may be provided in plurality in a vertical direction of each of the first inner wall portion and the second inner wall portion, and an area of each of the third windows in the first inner wall portion and the second inner wall portion may decrease upwards.

Here, the recessed portion may include a first recessed portion having a first width and a second recessed portion extending from the first recessed portion and having a width that is less than the first width.

Here, the second recessed portion may extend upwards from an upper end portion of the first recessed portion to a center of the main body, a step may be formed on the upper end portion of the first recessed portion as widths of the first inner wall portion and the second inner wall portion decrease, and the second recessed portion may extend upwards from the step.

Here, the second recessed portion may include a left recessed portion extending from the first inner wall portion and a right recessed portion extending from the second inner wall portion, the left recessed portion and the right recessed portion may be arranged apart from each other, and lower portions of the left recessed portion and the right recessed portion may be connected to each other by a connecting portion.

### Advantageous Effects

A humidifying module for a membrane humidifier according to an embodiment of the present disclosure provides an effect of improving humidification efficiency as wet gas flows from a stack to a center of the humidifying module.

### Brief Description of Drawings

FIG. 1 is an exploded perspective view of an existing membrane humidifier.
FIG. 2 illustrates wet gas flowing between cartridges shown in FIG. 1.
FIG. 3 is a perspective view of a cartridge for a membrane humidifier, according to an embodiment of the present disclosure.
FIG. 4 is an enlarged view of region A of FIG. 3.
FIG. 5 is an enlarged view of major portions of a cartridge, according to another embodiment of the present disclosure.
FIG. 6 is an enlarged view of region B of FIG. 4, illustrating third windows each having an area decreasing upwards.
FIG. 7 illustrates a recessed portion employed in another embodiment of the present disclosure.
FIG. 8 illustrates a recessed portion employed in another embodiment of the present disclosure.
FIG. 9 illustrates a cartridge with a pivoting cover.

### Mode for Invention

Hereinafter, one or more embodiments of the present disclosure are described with reference to the attached drawings. As the present disclosure allows for various changes and numerous embodiments, particular embodiments will be illustrated in the drawings and described in detail in the written description. However, this is not intended to limit one or more embodiments of the present disclosure to particular modes of practice, and it is to be appreciated that all changes and/or equivalents and substitutes that do not depart from the spirit and technical scope of embodiments of the present disclosure are encompassed in the present disclosure. With regard to the descriptions of the drawings, like reference numerals in the drawings denote like elements.

It will be further understood that the terms "comprises" and/or "comprising" that may be used in various embodiments of the present disclosure are intended to indicate the existence of the disclosed functions, steps, or components, but do not preclude the presence or addition of one or more other functions, steps, or components. Also, in one or more embodiments of the present disclosure, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

It may be understood that when a component is referred to as being "connected to" another component, the component may be directly connected to the other component, but an intervening component may exist therebetween. In contrast, when a component is described as being "directly connected to" or "directly contacting" another component, no intervening components are present.

The terms used in the present specification are merely used to describe particular embodiments, and are not intended to limit the present disclosure. As used herein, the singular forms "a," "an," and "the" are intended to include the plural forms as well, unless the context clearly indicates otherwise.

Unless otherwise defined, all terms including technical and scientific terms used herein have the same meaning as commonly understood by one of ordinary skill in the art to which this disclosure belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present disclosure relates to a cartridge for a membrane humidifier that humidifies dry gas supplied from the outside by using wet gas discharged from a fuel cell stack. The present disclosure also relates to a membrane humidifier employing the cartridge. The cartridge 1 according to the present disclosure may be employed in the membrane humidifier of FIG. 1. The cartridge 1 may be coupled to a housing 111. The housing 111 may include a coupling portion 112 to which the cartridge 1 is coupled. A wet off-gas inlet 111a through which a wet gas is introduced may be formed on one side of the housing 111, and an off-gas outlet 111b through which the wet gas introduced through the wet off-gas inlet 111a is discharged may be formed on the other side of the housing 111. As shown in FIG. 1, a first cap 120 and a second cap 130 may be coupled to both ends of the housing 111, respectively. The first cap 120 is coupled to one side of the housing 111, and external air is introduced through the first cap 120. The second cap 130 is coupled to the other side of the housing 111, and the external air is humidified while flowing through hollow fiber membranes and then discharged. Wet off-gas discharged from the stack is introduced into the cartridge 1 of the housing 111, and when the external air flows along the hollow fiber membranes 2, the wet gas flows along outer surfaces of the hollow fiber membranes 2. As the wet gas contacts the outer surfaces of the hollow fiber membranes 2, moisture may be delivered to the inside of the hollow fiber membranes 2, and thus, the external air may be humidified, and the humidified external air may be provided to the fuel cell stack through the second cap 130.

Hereinafter, the present disclosure will be described in more detail by explaining embodiments of the disclosure with reference to the attached drawings. The cartridge 1 for a membrane humidifier according to an embodiment of the present disclosure includes a main body 10, first windows 20, second windows 30, and a recessed portion 40.

First, the cartridge 1 is provided to humidify external air flowing through the hollow fiber membranes 2 arranged inside the cartridge 1, by using the wet gas. The hollow fiber membranes 2 are arranged inside the cartridge 1, and both end portions of the cartridge 1 and both end portions of the hollow fiber membranes 2 are potted to form a potting layer (not shown) and are fixed. The potting layer may be formed by curing a liquid polymer such as liquid polyurethane resin. The cartridge 1 may be detachably coupled to the coupling portion 112 of the housing 111.

The main body 10 provides a space in which the hollow fiber membranes 2 are accommodated. According to the present embodiment, the main body 10 has an elongated cross-section, the length of which in a vertical direction is greater than that in a horizontal direction. The main body 10 substantially has a "0" shape. The main body 10 may extend in the longitudinal direction of the housing 111.

The hollow fiber membrane 2 may be accommodated in the main body 10, and both ends of the hollow fiber membranes 2 may be potted to both ends of the main body 10. The hollow fiber membrane 2 may include a material allowing moisture in the wet gas to permeate. For example, the hollow fiber membrane 2 may include a polymer membrane formed of polysulfone resin, polyethersulfone resin, sulfonated polysulfone resin, polyvinylidene fluoride (PVDF) resin, polyacrylonitrile (PAN) resin, polyimide resin, polyamide-imide resin, polyesterimide resin, or a mixture of two or more thereof. As the hollow fiber membrane 2 may be potted and fixed to the main body 10, the cartridge 1 may be detachably mounted on the housing 111 as an integral unit.

The first windows 20 are formed in one side of the main body 10 to allow the introduction of the wet gas. According to the present embodiment, when the cartridge 1 is mounted on the housing 111, the first windows 20 are arranged on the lower side of the wet off-gas inlet 111a of the housing 111.

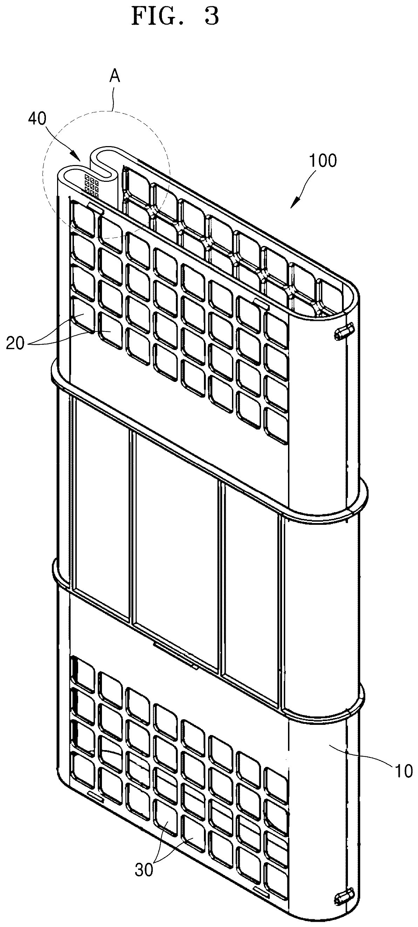

According to the present embodiment, multiple first windows 20 are provided on each side of the main body 10. Referring to FIG. 3, the first windows 20 are arranged in a plurality of columns in a vertical direction. The size of the first windows 20 or the number of columns may vary.

The first windows 20 may each have a sufficient area to efficiently deliver the wet gas towards the hollow fiber membranes 2, and when the wet gas is introduced, a side surface of the main body 10(that is, a grid portion forming the main body 10) between the first window 20 and an adjacent first window 20 may impinge on the wet gas as the wet gas flows into the main body 10, thereby reducing the pressure of the wet gas and preventing damage to the hollow fiber membranes 2.

The second windows 30 are formed in the other side of the main body 10 to discharge the wet gas introduced into the main body 10. According to the present embodiment, when the cartridge 1 is mounted on the housing 111, the second windows 30 are arranged on the lower side of the wet off-gas outlet 111b of the housing 111.

According to the present embodiment, multiple second windows 30 are provided on each side of the main body 10. Referring to FIG. 3, the second windows 30 are formed in a plurality of columns in a vertical direction. The size of the second windows 30 or the number of columns may vary.

The second windows 30 may each have a sufficient area to efficiently deliver the wet gas towards the hollow fiber membranes 2 and may be formed in substantially the same manner as the first windows 10 so that the wet gas introduced into the main body 10 may be smoothly discharged through the second windows 30. Based on FIG. 3, the wet gas introduced into the main body 10 through the first windows 20 may flow towards the rear end of the main body 10 and then be discharged outside the main body 10 through the second windows 30. The wet gas may be discharged to the outside of the main body 10 through the wet off-gas outlet 111b of the housing 111.

The recessed portion 40 is formed by being recessed upwards from the bottom surface of the main body 10 toward the center thereof. The term "recessed" refers to a state in which the outer surface of the main body 10 is indented inwards. According to the present embodiment, the recessed portion 40 includes a first inner wall portion 41, a second inner wall portion 42, and an upper surface 43.

The first inner wall portion 41 and the second inner wall portion 42 are opposite side surfaces formed as the bottom surface of the main body 10 is recessed. The first inner wall portion 41 and the second inner wall portion 42 face each other, and according to the present embodiment, the first inner wall portion 41 and the second inner wall portion 42 are arranged in parallel with each other. The arrangement of the first inner wall portion 41 and the second inner wall portion 42 is not limited to being parallel, and the distance therebetween may gradually increase or decrease upwards.

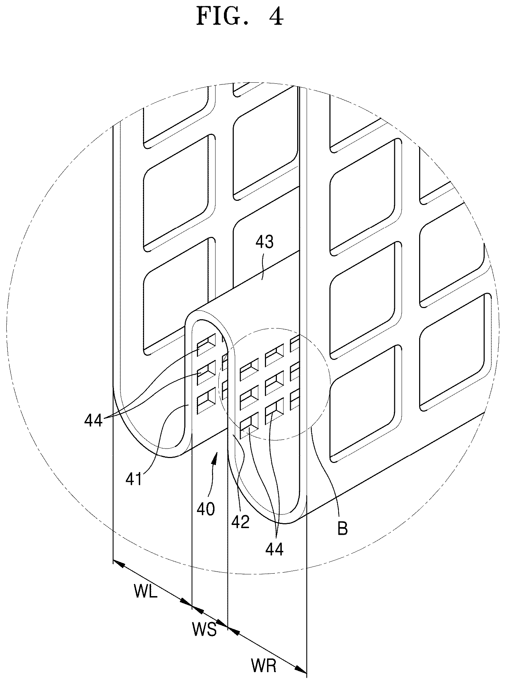

According to the present embodiment, third windows 44 through which the wet gas is introduced are formed in the first inner wall portion 41 and the second inner wall portion 42. As shown in FIG. 4, the third windows 44 may be formed in the first inner wall portion 41 and the second inner wall portion 42 in a plurality of columns. The third windows 44, together with the first windows 20 formed in both side surfaces of the main body 10, form flow paths through which the wet gas is additionally introduced into the main body 10, thereby increasing the penetration of the wet gas introduced into the main body 10.

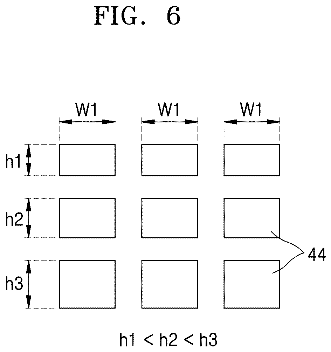

In addition, according to the present embodiment, as shown in FIG. 6, the plurality of third windows 44 may be provided in the vertical direction of each of the first inner wall portion 41 and the second inner wall portion 42, and the area of the third windows 44 in the first inner wall portion 41 and the second inner wall portion 42 may decrease upwards. The third windows 44 may be provided in a plurality of columns in the vertical direction, and the area of each third window 44 in each column may decrease upwards.

When the wet gas flowing towards the bottom surface of the main body 10 moves into the recessed portion 40, the third windows 44 may allow additional introduction of the wet gas into the main body 10. In the lower region where the wet gas is introduced into the recessed portion 40, the wet gas has relatively higher pressure than the upper region, and thus, the pressure of the wet gas may be effectively alleviated by increasing the area of the third windows 44 in the lower region.

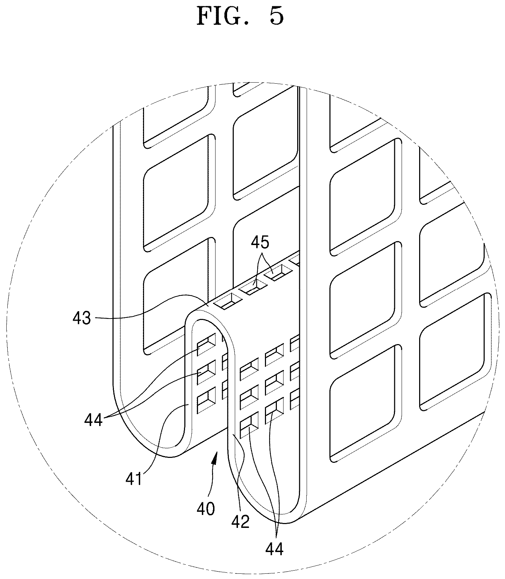

The upper surface 43 connects the upper portions of the first inner wall portion 41 and the second inner wall portion 42. According to the present embodiment, as shown in FIG. 4, the upper surface 43 has a curved portion that is convex upwards. In addition, as shown in FIG. 5, according to another embodiment of the present disclosure, fourth windows 45 through which the wet gas is introduced are formed in the upper surface 43.

The plurality of fourth windows 45 may be provided in the upper surface 43. The fourth windows 45 may form additional flow paths through which the wet gas flowing between the first inner wall portion 41 and the second inner wall portion 42 is introduced into the main body 10, and the fourth windows 45 may allow efficient transmission of the wet gas towards the hollow fiber membranes 2 arranged near the center of the main body 10.

As described above, together with the first windows 20 and the second windows 30, the third windows 44 and the fourth widows 45 may provide the flow paths through which the wet gas flows into the main body 10, thereby ensuring a sufficient flow of the wet gas transmitted to the hollow fiber membranes 2 and also relieving the pressure of the wet gas that increases at the lower side of the cartridge 1.

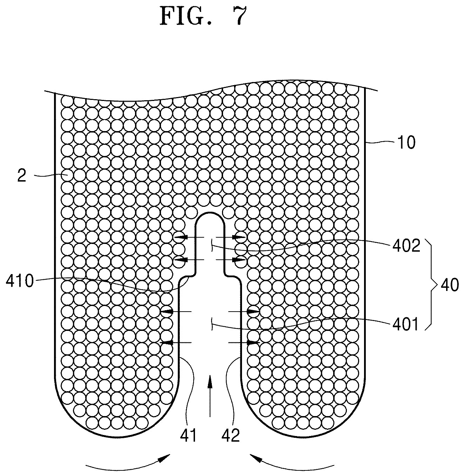

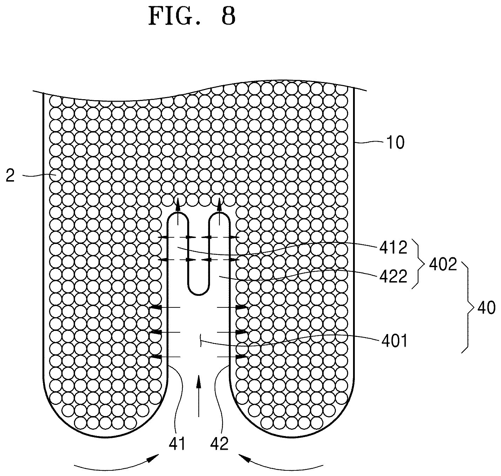

FIGS. 7 and 8 illustrate cross-sections of a cartridge according to another embodiment. In the embodiments of FIGS. 7 and 8, the structures and operations of the main body 10, the first windows 20, and the second windows 30 are substantially the same as those of the cartridge 1 of FIG. 3, and repeated descriptions are omitted. In the embodiments of FIGS. 7 and 8, the structure of the recessed portion 40 is different from that in the embodiment of FIG. 3, and the recessed portion 40 will be mainly described in detail below.

In the embodiments of FIGS. 7 and 8, the recessed portion 40 of the cartridge 1 includes a first recessed portion 401 and a second recessed portion 402. The first recessed portion 401 is provided in a lower portion of the bottom surface of the main body 10 and has a first width. Having the first width indicates that the first inner wall portion 41 and the second inner wall portion 42 have a certain first width. The second recessed portion 402 extends from the first recessed portion 401 and has a second width that is less than the first width.

Referring to FIG. 7, the second recessed portion 402 extends upwards from an upper end portion of the first recessed portion 401 towards the center of the main body 10. In this case, the upper end portion of the first recessed portion 401 has a step 410 as the widths of the first inner wall portion 41 and the second inner wall portion 42 decrease. The second recessed portion 402 extends upwards from the step 410. As shown in FIG. 7, a single second recessed portion 402 extends from the first recessed portion 401.

The third windows 44 described above may be formed in the first inner wall portion 41 and the second inner wall portion 42 of the first recessed portion 401 and the second recessed portion 402, and the fourth windows 45 may be formed in the upper surface 43 of the second recessed portion 402.

Referring to FIG. 8, the second recessed portion 402 includes a left recessed portion 412 extending from the first inner wall portion 41 and a right recessed portion 422 extending from the second inner wall portion 42. As shown in FIG. 8, the left recessed portion 412 and the right recessed portion 422 are arranged apart from each other, and bottom portions thereof are connected to each other by a connecting portion 420.

The connection portion 420 may allow pressure of the wet gas to be reduced, as the wet gas flowing upward through the first recessed portion 401 impinges on the connection portion 420. In addition, the third windows 44 described above may be formed in the first inner wall portion 41 and the second inner wall portion 42 of the first recessed portion 401 and may also be formed in the first inner wall portion 41 and the second inner wall portion 42 that form the left recessed portion 412 and the second recessed portion 422. Moreover, the fourth windows 45 may be formed in upper portions 43 of the left recessed portion 412 and the right recessed portion 422.

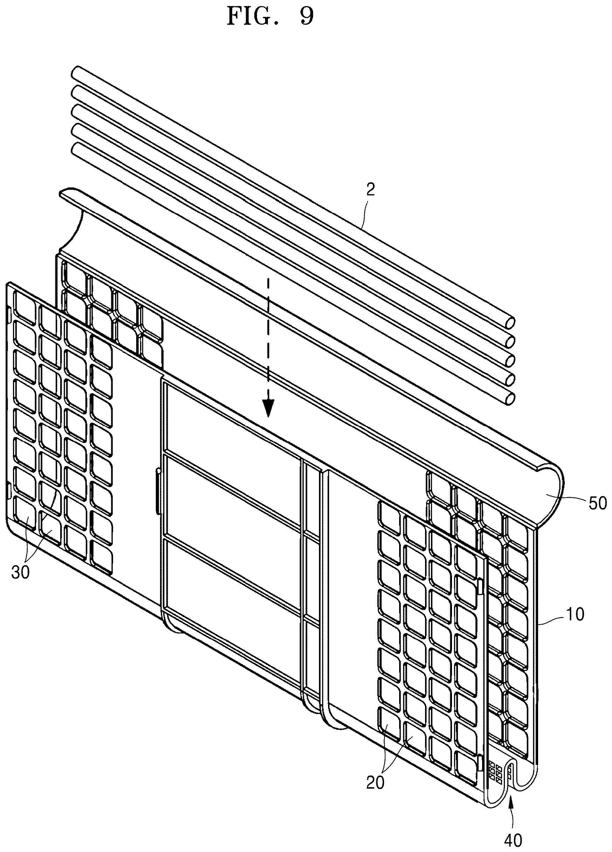

According to the present embodiment, as shown in FIG. 9, the main body 10 includes a pivoting cover 50. The pivoting cover 50 is placed on the upper portion of the main body 10. The pivoting cover 50 is formed on the opposite side to the lower portion of the main body 10 in which the recessed portion 40 is formed. The pivoting cover 50 is formed to cover the upper portion of the main body 10 with respect to one side surface of the main body 10. While the interior of the main body 10 is open, the pivoting cover 50 may allow the hollow fiber membranes 2 to be loaded. Due to the pivoting cover 50, the hollow fiber membranes 2 may be easily loaded into the main body 10.

According to another aspect of the present disclosure, a membrane humidifier including the above-described cartridge is provided.

The membrane humidifier according to an embodiment of the present disclosure may include a housing 110, a first cap 120, a second cap 130, and a cartridge 40.

Specifically, the wet off-gas inlet 111a, through which the wet gas is introduced, is formed on one side of the housing 110, and the wet off-gas outlet 111b, through which the wet gas introduced through the wet off-gas inlet 111a is discharged, is formed on the other side of the housing 110. The first cap 120 is coupled to one side of the housing 111, and external air is introduced. The second cap 130 is coupled to the other side of the housing 111, and the external air is humidified while flowing through the hollow fiber membranes 2 and then discharged. Because the housing 111, the first cap 120, and the second cap 130 are described above, their descriptions are not repeated.

The cartridge 1 may be detachably coupled to the housing 111 and may include the main body 10 having a space for accommodating the hollow fiber membranes 2, the first windows 20 formed in one side of the main body 10 and through which the wet gas is introduced, the second windows 30 formed in the other side of the main body 10 and through which the wet gas is discharged, and the recessed portion 40 formed in the bottom surface of the main body 10 and recessed upwards towards the center of the main body 10. The cartridge 1 employed in the membrane humidifier of the present disclosure may substantially employ the structure of the cartridge 1 described above.

Specifically, the recessed portion 40 may include the first inner wall portion 41, the second inner wall portion 42 facing the first inner wall portion 41, and the upper surface 43 connecting the upper portion of the first inner wall portion 41 to that of the second inner wall portion 42. The third windows 44 through which the wet gas is introduced may be formed in the first inner wall portion 41 and the second inner wall portion 42. In addition, the fourth windows 45 through which the wet gas is introduced may be formed in the upper surface 43. The upper surface 43 may have a curved surface that is convex upwards. Multiple third windows 44 may be formed in the vertical direction of each of the first inner wall portion 41 and the second inner wall portion 42, and the area of each of the third windows 44 formed in each of the first inner wall portion 41 and the second inner wall portion 42 may decrease upwards. Because the functions and effects of the first inner wall portion 41, the second inner wall portion 42, the third windows 44, and the fourth windows 45 are described above, their descriptions are not repeated.

In addition, a membrane humidifier according to another embodiment of the present disclosure may employ the cartridge in which a recessed portion 40 of another type is formed. Specifically, the recessed portion 40 may include a first recessed portion 401 having a first width and a second recessed portion 402 extending from the first recessed portion 401 and having a width that is less than the first width.

For example, as shown in FIG. 7, the second recessed portion 402 may extend upwards from the upper end portion of the first recessed portion 401 to the center of the main body 10, the step 410 may be formed on the upper end portion of the first recessed portion 401 as the widths of the first inner wall portion 41 and the second inner wall portion 42 decrease, and the second recessed portion 402 may extend upwards from the step 410.

Also, as shown in FIG. 8, the second recessed portion 402 may include the left recessed portion 412 extending from the first inner wall portion 41 and the right recessed portion 422 extending from the second inner wall portion 42. The left recessed portion 412 and the right recessed portion 422 may be arranged apart from each other, and bottom portions thereof are connected to each other by the connecting portion 420.

A membrane humidifier according to an embodiment of the present disclosure may provide the same functions and effects as those of the above-described cartridge. Thus, the descriptions regarding the functions and effects of the cartridge are not repeated.

While the present disclosure has been described in detail with reference to preferred embodiments, the present disclosure is not limited to the above embodiments, and various modifications may be made without departing from the scope of the present disclosure.

## Claims

1. A cartridge for a membrane humidifier, comprising:
a main body 10 having a space in which a plurality of hollow fiber membranes are accommodated;
a first window 20 which is formed in one side of the main body 10 and through which a wet gas is introduced;
a second window 30 which is formed in another side of the main body 10 and through which the wet gas is discharged; and
a recessed portion 40 provided in a bottom surface of the main body 10 and recessed upwards towards a center of the main body 10.

2. The cartridge of claim 1, wherein the recessed portion 40 comprises:
a first inner wall portion 41;
a second inner wall portion 42 facing the first inner wall portion 41; and
an upper surface 43 connecting an upper portion of the first inner wall portion 41 to an upper portion of the second inner wall portion 42, and
a third window 44 through which the wet gas is introduced is formed in the first inner wall portion 41 and the second inner wall portion 42.

3. The cartridge of claim 1, wherein the recessed portion 40 comprises:
a first inner wall portion 41;
a second inner wall portion 42 facing the first inner wall portion 41; and
an upper surface 43 connecting an upper portion of the first inner wall portion 41 to an upper portion of the second inner wall portion 42, and
a fourth window 45 through which the wet gas is introduced is formed in the upper surface 43.

4. The cartridge of claim 2 or claim 3, wherein
the upper surface 43 has a curved portion that is convex upwards.

5. The cartridge of claim 2, wherein
the third window 44 is provided in plurality in a vertical direction of each of the first inner wall portion 41 and the second inner wall portion 42, and an area of each of the third windows 44 in the first inner wall portion 41 and the second inner wall portion 42 decreases upwards.

6. The cartridge of claim 1, wherein
the recessed portion 40 comprises a first recessed portion 401 having a first width and a second recessed portion 402 extending from the first recessed portion 401 and having a width that is less than the first width.

7. The cartridge of claim 6, wherein
the second recessed portion 402 extends upwards from an upper end portion of the first recessed portion 401 to a center of the main body 10,
a step 410 is formed on the upper end portion of the first recessed portion 401 as widths of the first inner wall portion 41 and the second inner wall portion 42 decrease, and the second recessed portion 402 extends upwards from the step 410.

8. The cartridge of claim 6, wherein
the second recessed portion 402 comprises a left recessed portion 412 extending from the first inner wall portion 41 and a right recessed portion 422 extending from the second inner wall portion 42,
the left recessed portion 412 and the right recessed portion 422 are arranged apart from each other, and lower portions of the left recessed portion 412 and the right recessed portion 422 are connected to each other by a connecting portion 420.

9. A membrane humidifier comprising:
a hosing 110 comprising a wet off-gas inlet 111a on one side and a wet off-gas outlet (off-gas outlet) 111b on another side, wherein a wet gas is introduced through the wet off-gas inlet 111a, and the wet gas introduced through the wet off-gas inlet 111a is discharged through the wet off-gas outlet 111b;
a cartridge comprising a main body 10 that is detachably coupled to the housing and has a space for accommodating a plurality of hollow fiber membranes, a first window 20 formed in one side of the main body and through which the wet gas is introduced, a second window 30 formed in the other side of the main body and through which the wet gas is discharged, and a recessed portion 40 provided in a bottom surface of the main body and recessed upwards towards a center of the main body 10;
a first cap 120 coupled to the one side of the housing and through which external air is introduced; and
a second cap 130 coupled to the other side of the housing so that the external air is humidified while flowing along the plurality of hollow fiber membranes and is discharged.

10. The membrane humidifier of claim 9, wherein the recessed portion 40 comprises:
a first inner wall portion 41;
a second inner wall portion 42 facing the first inner wall portion 41; and
an upper surface 43 connecting an upper portion of the first inner wall portion 41 to an upper portion of the second inner wall portion 42, and
a third window 44 through which the wet gas is introduced is formed in the first inner wall portion 41 and the second inner wall portion 42.

11. The membrane humidifier of claim 9, wherein the recessed portion 40 comprises:
a first inner wall portion 41;
a second inner wall portion 42 facing the first inner wall portion 41; and
an upper surface 43 connecting an upper portion of the first inner wall portion 41 to an upper portion of the second inner wall portion 42, and
a fourth windows 45 through which the wet gas is introduced is formed in the upper surface 43.

12. The membrane humidifier of claim 10 or claim 11, wherein
the upper surface 43 has a curved portion that is convex upwards.

13. The membrane humidifier of claim 10, wherein
the third window 44 is provided in plurality in a vertical direction of each of the first inner wall portion 41 and the second inner wall portion 42, and an area of each of the third windows 44 in the first inner wall portion 41 and the second inner wall portion 42 decreases upwards.

14. The membrane humidifier of claim 9, wherein
the recessed portion 40 comprises a first recessed portion 401 having a first width and a second recessed portion 402 extending from the first recessed portion 401 and having a width that is less than the first width.

15. The membrane humidifier of claim 14, wherein
the second recessed portion 402 extends upwards from an upper end portion of the first recessed portion 401 to a center of the main body 10,
a step 410 is formed on the upper end portion of the first recessed portion 401 as widths of the first inner wall portion 41 and the second inner wall portion 42 decrease, and the second recessed portion 402 extends upwards from the step 410.

16. The membrane humidifier of claim 14, wherein
the second recessed portion 402 comprises a left recessed portion 412 extending from the first inner wall portion 41 and a right recessed portion 422 extending from the second inner wall portion 42,
the left recessed portion 412 and the right recessed portion 422 are arranged apart from each other, and lower portions of the left recessed portion 412 and the right recessed portion 422 are connected to each other by a connecting portion 420.
